# FASCICULE DE BREVET EUROPEEN

(11) **EP 3 838 666 B1**
(45) Date de publication et mention de la délivrance du brevet: **03.08.2022**
(21) Numéro de dépôt: 20214643.7
(22) Date de dépôt: 16.12.2020
(51) Int. Cl.: B60P 1/64, B60P 7/13

(54) **SUPPORT DE LEVAGE DE CONTENEUR PAR DES ORIFICES SUPÉRIEURS DU CONTENEUR**
HALTERUNG ZUM ANHEBEN VON BEHÄLTERN AN DEN OBEREN BEHÄLTERÖFFNUNGEN
SUPPORT FOR LIFTING CONTAINER BY UPPER HOLES OF THE CONTAINER

(30) Priorité: 16.12.2019 FR 1914488
(43) Date de publication de la demande: 23.06.2021
(73) Titulaire: Guima Palfinger S.A.S., 82300 Caussade (FR)
(72) Inventeur: JONDET, Stéphane, 82800 NÈGREPELISSE (FR); RAUCOULES, Michel, 82440 REALVILLE (FR)
(74) Mandataire: Regimbeau

(56) Documents cités:
- DE-A1- 4 143 001
- FR-A1- 2 750 088
- US-A- 4 968 080

## Description

### DOMAINE DE L'INVENTION

La présente invention concerne le domaine des supports de levage de conteneurs, en particulier des supports de levage adaptés pour coopérer avec des orifices avant des conteneurs ISO.

### ETAT DE LA TECHNIQUE

Un conteneur se présente classiquement sous la forme d'un caisson parallélépipédique, destiné au transport de marchandises. La norme ISO définit des standards pour les conteneurs, notamment de dimensions (longueur, largeur, hauteur), de masse, ou encore de configurations (disposition d'orifices permettant la saisie du conteneur, etc.). De par la standardisation des conteneurs, la norme ISO facilite leur manutention.

En vue du transport des marchandises, le conteneur ISO doit être déplacé et levé, pour être chargé et déchargé sur différents véhicules, par exemple des camions ou des bateaux.

La manutention d'un conteneur ISO, par exemple dans des installations portuaires, est classiquement effectuée par le biais d'un système de levage de conteneur s'engageant dans des orifices des quatre coins de la face supérieure du conteneur, la face supérieure étant la face opposée à la face posée au sol. Le système de levage verrouille ensuite le conteneur, par exemple par le biais de verrous tournants. Le support de levage est alors actionné hydrauliquement par le bais d'un moyen de manutention. Le support de levage, donc le conteneur, est déplacé, de sorte à charger ou décharger le conteneur d'un véhicule, ou à le transporter.

La manutention d'un conteneur ISO peut également être effectuée par le biais d'un système de levage s'engageant dans des orifices formés dans les quatre coins d'une face avant du conteneur, la face avant correspondant à une face de plus petites dimensions du conteneur. Par exemple, les camions porte-conteneurs permettent de charger un conteneur sur le camion en le tirant par sa face avant, ainsi que divulgué dans les documents DE 41 43 001 A1 ou US 4 968 080 A et qu'illustré en figure 1. Plus précisément, le conteneur est tiré jusqu'à ce que sa face inférieure entre en contact avec le plancher du camion. Le plancher du camion comprend des rouleaux. Le camion est alors déplacé vers l'arrière et le conteneur glisse sur les rouleaux, jusqu'à être chargé sur le camion.

Le système de levage comprend alors un support de levage 1', également appelé cadre de manutention, ou en anglais Container Handling Unit (CHU). Le support de levage 1' est accroché à un bras de levage 2' actionné hydrauliquement du camion porte-conteneur 3'.

Le support de levage 1' est déplacé par le bras de levage 2' pour être positionné en face de la face avant 41' du conteneur 4'. Le support de levage 1' comprend des pions supérieurs et des pions inférieurs, qui sont mis en place dans des orifices complémentaires formés dans les quatre coins de la face avant 41' du conteneur 4'. Les pions supérieurs sont mis en place dans des orifices hauts formés dans la face supérieure du conteneur 4' au niveau des coins avant supérieurs. Les pions inférieurs sont mis en place et verrouillés dans des orifices bas formés dans les faces latérales du conteneur 4' au niveau des coins avant inférieurs. Le support de levage 1' est ainsi mis en place et verrouillé sur le conteneur 4'.

Les coins avant inférieurs du conteneur peuvent dans certaines conditions être difficilement accessibles. Cette situation peut survenir par exemple dans les pays froids ou humides, où les coins avant inférieurs du conteneur peuvent être par exemple recouverts de neige, de glace, ou de boue. Il n'est alors pas possible d'accrocher les pions inférieurs du support de levage aux orifices bas du conteneur sans dégager au préalable le conteneur, en nettoyant sa partie inférieure voire en creusant le sol.

Or, les pions supérieurs du support de levage seuls ne permettent pas de déplacer, de soulever, ou de tirer le conteneur. D'une part, ils ne sont pas verrouillés dans les orifices hauts de la face supérieure du conteneur, mais seulement engagés dedans. Par conséquent, une force verticale vers le haut exercée par le bras de levage sur le support de levage pour soulever le conteneur entraînerait simplement un désengagement des pions supérieurs des orifices hauts, et seul le support de levage serait soulevé. D'autre part, si seuls les pions supérieurs sont mis en place dans les orifices hauts, une force longitudinale ou latérale exercée par le bras de levage sur le support de levage pour tirer le conteneur vers l'avant entraînerait un basculement du support de levage en rotation sans que la force ne soit transmise au conteneur.

Par conséquent, dans le cas où les coins inférieurs du conteneur sont difficilement accessibles, le support de levage ne peut pas assurer le levage ou le déplacement du conteneur sans un dégagement préalable des coins inférieurs du conteneur. Un tel dégagement peut s'avérer long et laborieux, voire impossible.

Par ailleurs, le support de levage doit dans certains cas respecter des contraintes supplémentaires, en particulier des contraintes d'encombrement pour lui permettre d'être transporté, par exemple par transport ferroviaire dans des tunnels, ou encore par transport aérien dans des avions. Certaines pièces du support de levage peuvent alors être dépliées lorsque le support est dans la position de travail et repliées lorsque le support est dans la position de transport, afin de permettre au support de levage de respecter les dimensions, et notamment la hauteur, compatibles de son transport.

### EXPOSE DE L'INVENTION

Un but de l'invention est de proposer un support de levage adapté pour permettre une mise en place par rapport à un conteneur dont les coins avant inférieurs sont difficilement accessibles.

Selon un premier aspect, l'invention concerne un support de levage de conteneur comprenant :
- deux pions supérieurs et deux pions inférieurs, adaptés pour être insérés dans des orifices complémentaires du conteneur lorsque le support de levage est dans une première position vis-à-vis du conteneur,
- deux pions intermédiaires, positionnés entre les deux pions supérieurs et les deux pions inférieurs, et adaptés pour être insérés dans deux orifices complémentaires supérieurs du conteneur lorsque le support de levage est dans une deuxième position vis-à-vis du conteneur.

Certaines caractéristiques préférées mais non limitatives du support de levage décrit ci-dessus sont les suivantes, prises individuellement ou en combinaison :
- chaque pion intermédiaire comprend une tige centrale destinée à être insérée dans un orifice supérieur du conteneur ;
- chaque pion intermédiaire est mobile en rotation dans une lumière du support de levage de manière à pouvoir passer d'une position d'insertion dans l'orifice supérieur dans laquelle le pion intermédiaire est libre en translation dans l'orifice supérieur, à une position verrouillée dans laquelle le pion intermédiaire est bloqué en translation dans l'orifice supérieur ;
- chaque pion intermédiaire comprend une excroissance radiale de la tige centrale adaptée pour assurer un verrouillage par un montage de type à baïonnette lorsque le pion intermédiaire est inséré et pivoté dans l'orifice complémentaire supérieur du conteneur ;
- chaque pion intermédiaire comprend une extrémité montée libre en rotation autour de la tige centrale et coaxialement à la tige centrale ;
- chaque pion intermédiaire comprend un contrepoids et un balancier situés de part et d'autre de la tige centrale et solidaires de la tige centrale ;
- le balancier comporte un anneau de préhension adapté pour permettre une préhension du balancier par des moyens de préhension ;
- le contrepoids présente une masse supérieure à la masse du balancier, et lorsque le pion intermédiaire est dans la position d'insertion, le centre de gravité du pion intermédiaire se trouve en-dessous de l'axe de rotation longitudinal du pion intermédiaire ;
- le support de levage comprend en outre une fourchette adaptée pour coopérer avec une rainure annulaire de la tige centrale du pion intermédiaire, de sorte à maintenir le pion intermédiaire dans le support de levage ;
- le support de levage présente une forme sensiblement en X, les deux pions supérieurs étant situés au niveau des extrémités supérieures des deux branches du X et les deux pions inférieurs étant situés au niveau des extrémités inférieures des deux branches du X;
- le support de levage comprend en outre un élément d'accrochage adapté pour permettre un accrochage du support de levage à un bras de levage, ledit bras de levage permettant alors de déplacer le support de levage.

Selon un deuxième aspect, l'invention concerne un appareil de levage hydraulique de conteneur comprenant un support de levage selon le premier aspect.

L'élément d'accrochage du support de levage peut être une barre d'accrochage adaptée pour être crochetée par un crochet du bras de levage, le support de levage étant mobile en rotation autour de la barre d'accrochage.

Selon un troisième aspect, l'invention concerne un procédé de levage hydraulique de conteneur adapté pour être mis en œuvre à l'aide d'un support de levage selon le premier aspect. Le procédé comprend les étapes suivantes :
- mise en place du support de levage dans la deuxième position vis-à-vis d'un conteneur,
- insertion des pions intermédiaires dans des orifices complémentaires supérieurs du conteneur,
- verrouillage des pions intermédiaires dans les orifices supérieurs par un pivotement des pions intermédiaires dans les orifices supérieurs,
- déplacement du conteneur par le biais d'un déplacement hydraulique du support de levage.

### DESCRIPTION DES FIGURES

D'autres caractéristiques, buts et avantages de la présente invention apparaîtront à la lecture de la description détaillée qui va suivre, donnée à titre d'exemple non limitatif, qui sera illustrée par les figures suivantes :

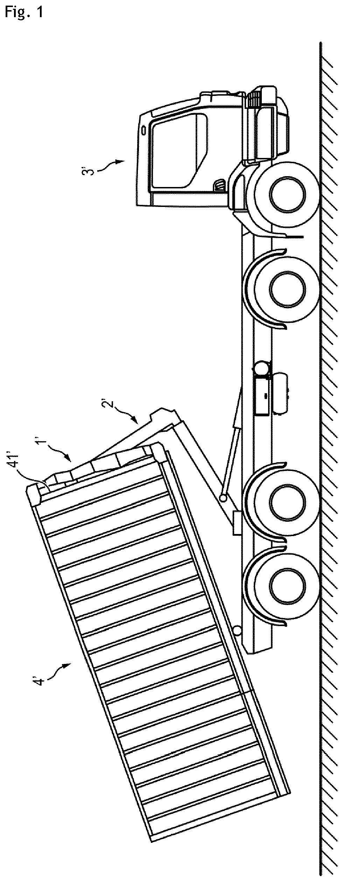

La figure 1, déjà commentée, représente une vue schématique de côté d'un camion porte-conteneur et d'un support de levage selon l'art antérieur.
La figure 2a représente une vue schématique en perspective d'un support de levage de conteneur selon un mode de réalisation de l'invention.
La figure 2b représente une vue schématique en perspective d'un support de levage de conteneur partiellement replié selon un mode de réalisation de l'invention.
Les figures 3a et 3b représentent respectivement une vue schématique en perspective et une vue en coupe d'un pion intermédiaire d'un support de levage de conteneur selon un mode de réalisation de l'invention.
Les figures 3c et 3d représentent une vue schématique d'une perche adaptée pour venir en prise avec un pion intermédiaire d'un support de levage de conteneur selon un mode de réalisation de l'invention.
La figure 4a représente une vue schématique en perspective d'une partie d'un support de levage de conteneur selon un mode de réalisation de l'invention, dont le pion intermédiaire est dans une position de levage quatre points.
Les figures 4b et 4c représentent des vues schématiques en perspective d'une partie d'un support de levage de conteneur selon un mode de réalisation de l'invention, dont le pion intermédiaire est dans une position de levage deux points.
Les figures 5a et 5b représentent des vues schématiques en perspective d'un support de levage de conteneur selon un mode de réalisation de l'invention, le support de levage étant positionné vis-à-vis d'un conteneur, les pions intermédiaires du support de levage étant dans une position de levage deux points et présentant respectivement une position d'insertion et une position verrouillée.
Les figures 6a et 6b représentent des vues schématiques, respectivement d'arrière et de face, d'un support de levage de conteneur selon un mode de réalisation de l'invention.

### DESCRIPTION DETAILLEE DE L'INVENTION

### Conteneur 4

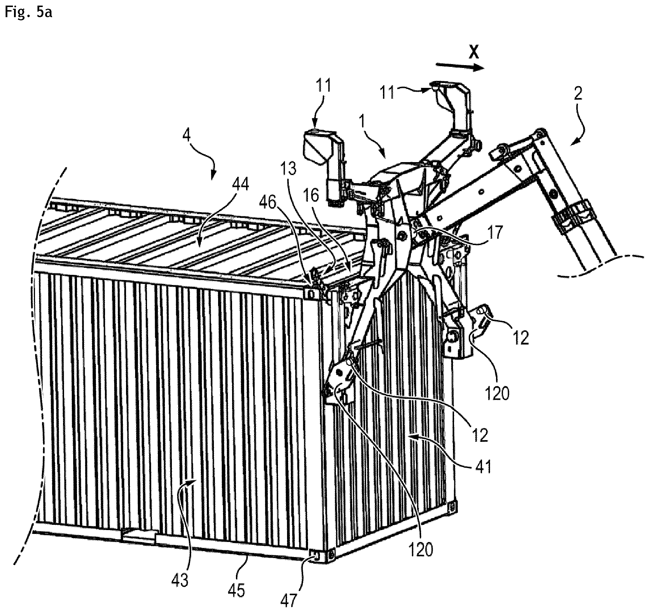

Un conteneur 4, partiellement illustré par exemple en figure 5a, peut être un caisson parallélépipédique. Le conteneur 4 peut présenter des dimensions et une configuration respectant la norme ISO.

Un conteneur 4 posé sur une surface telle que le sol ou un châssis d'un camion porte-conteneurs 3 comprend une face inférieure 45 posée sur ladite surface et une face supérieure 44 opposée à la face inférieure 45. Le conteneur 4 comprend également une face avant 41 et une face arrière opposée à la face avant 41, ainsi que deux faces latérales 43 opposées. Les faces avant 41 et arrière peuvent correspondre aux faces de plus petites dimensions du conteneur 4.

Un conteneur 4 comprend classiquement huit coins, chaque coin délimitant une frontière entre trois faces du conteneur 4, et comprenant trois orifices débouchant de chacune de ces trois faces. Par exemple, la face avant 41 d'un conteneur 4 comprend deux coins avant supérieurs opposés latéralement et deux coins avant inférieurs opposés latéralement. Chaque coin avant supérieur (respectivement inférieur) forme la jonction entre la face supérieure 44 (respectivement inférieure 45), la face avant 41 et une face latérale 43 du conteneur 4, et comprend un orifice débouchant de la face supérieure 44 (respectivement inférieure 45), un orifice débouchant de la face avant 41, et un orifice débouchant d'une face latérale 43 du conteneur 4.

### Support de levage 1 de conteneur 4

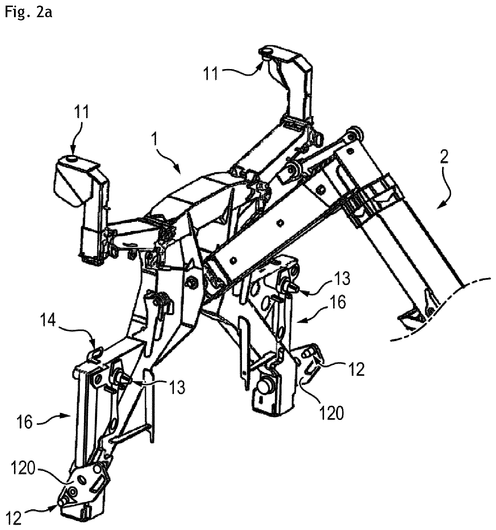

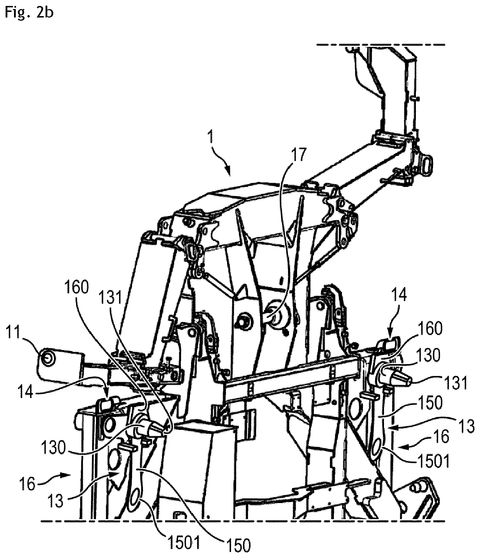

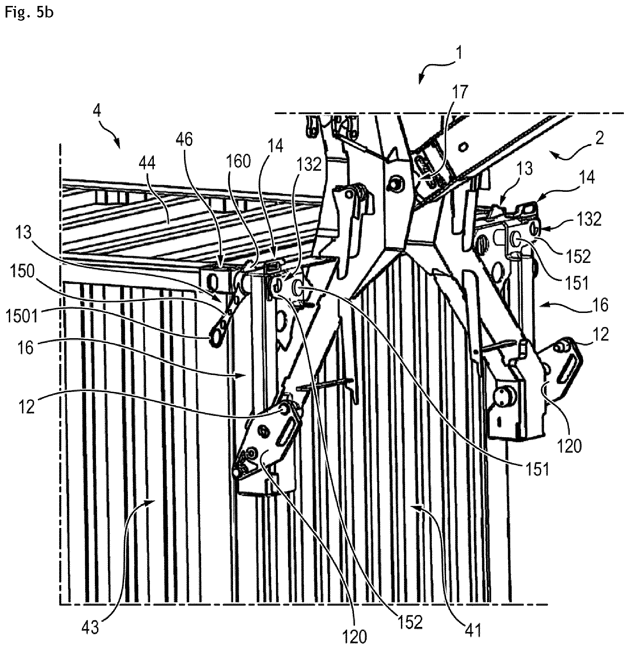

Un support de levage 1 de conteneur 4 est illustré à titre d'exemple non limitatif en figures 2a, 2b et 5a, 5b. Le support de levage 1 est adapté pour être déplacé hydrauliquement. Le support de levage 1 comprend :
- deux pions supérieurs 11 et deux pions inférieurs 12, adaptés pour être insérés dans des orifices complémentaires 46, 47 du conteneur 4 lorsque le support de levage 1 est dans une première position vis-à-vis du conteneur 4,
- deux pions intermédiaires 13, positionnés entre les deux pions supérieurs 11 et les deux pions inférieurs 12, et adaptés pour être insérés dans deux orifices complémentaires supérieurs 48 du conteneur 4 lorsque le support de levage 1 est dans une deuxième position vis-à-vis du conteneur 4.

Le support de levage 1 s'étend sensiblement dans un plan. Lorsque le support de levage 1 est dans la deuxième position, le plan contenant le support de levage 1 contient une direction verticale et une direction latérale perpendiculaire à la direction verticale. Une dimension dans la direction verticale est appelée hauteur. Un axe longitudinal X est un axe sensiblement perpendiculaire au plan contenant le support de levage 1.

Le plan contenant le support de levage 1 dans la première position et/ou dans la deuxième position peut être sensiblement parallèle à une face avant 41 du conteneur 4.

Les pions intermédiaires 13 sont positionnés entre les pions supérieurs 11 et les pions inférieurs 12, c'est-à-dire que leur hauteur est comprise entre la hauteur des pions supérieurs 11 et la hauteur des pions inférieurs 12 lorsque le support de levage 1 est positionné vis-à-vis du conteneur 4. Les deux pions intermédiaires 13 peuvent être symétriques par rapport à la direction verticale, c'est-à-dire qu'ils sont opposés latéralement.

Les orifices complémentaires 46, 47 du conteneur 4 peuvent consister en deux orifices hauts 46 et en deux orifices bas 47. Les deux pions supérieurs 11 sont destinés à être insérés dans les deux orifices hauts 46, et les deux pions inférieurs 12 sont destinés à être insérés dans les deux orifices bas 47 lorsque le support de levage 1 est dans la première position, en vue d'assurer un déplacement du conteneur 4.

Le support de levage 1 de conteneur 4 peut être déplacé entre la première position et la deuxième position par le biais de tout déplacement envisageable, en particulier par une translation sensiblement dans la direction verticale vers le haut. Ces deux positions permettent une mise en place du support de levage 1 par rapport au conteneur 4 soit par le biais des deux pions inférieurs 12 et des deux pions supérieurs 11, soit par le biais des deux pions intermédiaires 13.

Dans la première position du support de levage 1, les deux pions supérieurs 11 sont mis en place en face des deux orifices complémentaires hauts 46 du conteneur 4, et les deux pions inférieurs 12 sont mis en place en face des deux orifices complémentaires bas 47 du conteneur 4. Le support de levage 1 peut alors être fixé au conteneur 4 par le biais des pions supérieurs 11 et des pions inférieurs 12.

Dans la deuxième position du support de levage 1, les deux pions intermédiaires 13 sont adaptés pour être mis en place en face des deux orifices complémentaires supérieurs 48 du conteneur 4. Par conséquent, la deuxième position du support de levage 1 ne nécessite pas d'accès à la partie inférieure du conteneur 4. La deuxième position du support de levage 1 est donc particulièrement avantageuse lorsque la partie inférieure du conteneur 4, en particulier les coins avant où sont formés les orifices bas 47, est difficilement accessible, par exemple lorsque la partie inférieure du conteneur 4 est recouverte de neige, de glace, ou encore de boue. Les pions intermédiaires 13 peuvent être insérés dans les orifices supérieurs 48 sans nécessiter un dégagement préalable des de la partie inférieure du conteneur 4.

L'utilisation des orifices supérieurs 48 du conteneur 4 permet de déplacer le conteneur 4 sur une courte distance, par exemple pour dégager les coins inférieurs du conteneur 4, sans endommager les orifices supérieurs 48. Le support de levage 1 peut ensuite être déplacé dans la première position, de sorte à soulever et déplacer le conteneur 4 par une accroche à quatre pions 11, 12 et quatre orifices 46, 47.

Les deux pions supérieurs 11 et/ou les deux pions inférieurs 12 une fois insérés dans les orifices hauts 46 et bas 47 peuvent être verrouillés dans ces orifices hauts 46 et/ou bas 47. Ainsi, le support de levage 1 est solidarisé du conteneur 4. Le conteneur 4 peut alors être déplacé, par exemple soulevé, tiré, ou abaissé, par un déplacement correspondant du support de levage 1.

En particulier, les deux pions inférieurs 12 peuvent être insérés dans les orifices bas 47 et être verrouillés dans les orifices bas 47, tandis que les deux pions supérieurs 11 sont insérés dans les orifices hauts 46 sans être verrouillés dans les orifices hauts 46. Les deux pions supérieurs 11 contribuent à la mise en place du support de levage 1 par rapport au conteneur 4, notamment lors d'un déplacement du support de levage 1 selon l'axe longitudinal X et/ou l'axe latéral, par exemple lorsque le conteneur 4 est tiré vers un camion porte-conteneur 3.

Les deux orifices hauts 46 peuvent correspondre aux deux orifices débouchant de la face supérieure 44 du conteneur 4 au niveau de ses deux coins avant supérieurs. Les pions supérieurs 11 peuvent être sensiblement cylindriques et dirigés selon l'axe vertical lorsque le support de levage 1 est dans la première position, et peuvent être insérés dans les orifices hauts 46 sans y être verrouillés.

Les deux orifices bas 47 peuvent correspondre aux deux orifices débouchant des deux faces latérales 43 du conteneur 4 au niveau de ses deux coins avant inférieurs. Les pions inférieurs 12 peuvent être sensiblement cylindriques et dirigés selon l'axe latéral lorsque le support de levage 1 est dans la deuxième position.

Les pions inférieurs 12 peuvent être insérés et verrouillés dans les orifices bas 47, par exemple par un montage de type à baïonnette. En variante, le verrouillage des pions inférieurs 12 peut être assuré par deux poignées 120 mobiles dans un plan latéral, les pions inférieurs 12 étant rapportés sur ces deux poignées 120. Les poignées peuvent être situées chacune en face d'une face latérale 43 du conteneur 4 lorsque le support de levage 1 est dans la deuxième position. Chaque poignée 120 peut être déverrouillée en retirant une clavette, puis tirée de sorte à l'éloigner de la face latérale 43 du conteneur 4, puis actionnée en rotation de sorte à placer le pion inférieur 12 en face de l'orifice bas 47. La poignée 120 est alors poussée de sorte à engager le pion inférieur 12 dans l'orifice bas 47. Enfin, la poignée 120 est verrouillée en replaçant la clavette. Le support de levage 1 est alors solidaire du conteneur 4.

Les deux orifices complémentaires supérieurs 48 du conteneur 4 peuvent correspondre à des orifices formés dans la face avant 41 du conteneur 4, ces orifices supérieurs 48 s'étendant sensiblement selon l'axe longitudinal X. Les deux pions intermédiaires 13 peuvent être des pions sensiblement cylindriques, rapportés sur le support de levage 1 et s'étendant sensiblement perpendiculairement au plan formé par le support de levage 1, c'est-à-dire selon l'axe longitudinal X. Ainsi, lorsque le support de levage 1 est dans la deuxième position, les deux pions intermédiaires 13 sont coaxiaux des orifices supérieurs 48 du conteneur 4 de sorte à pouvoir y être facilement insérés.

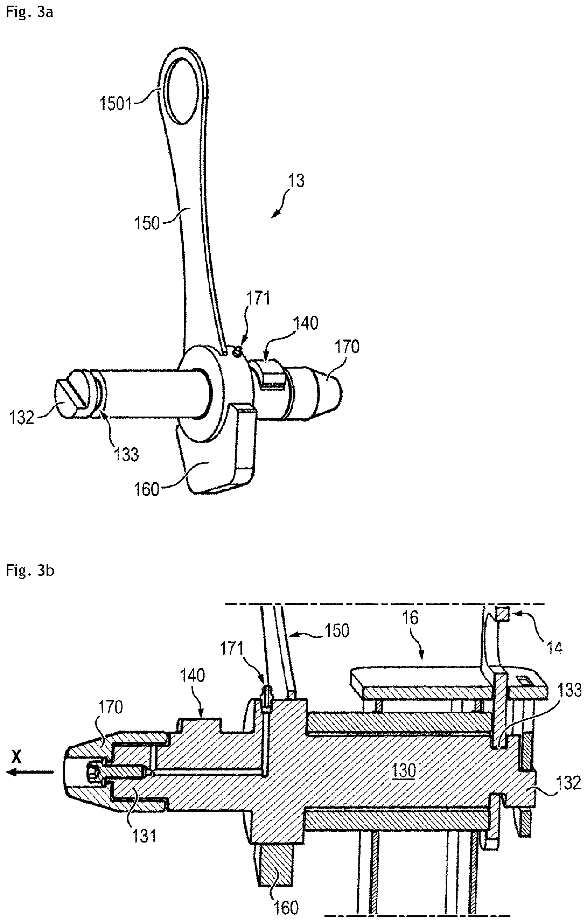

Chaque pion intermédiaire 13, illustré à titre d'exemple non limitatif entre autres en figures 3a et 3b, peut comprendre une tige centrale 130 destinée à être insérée dans un orifice supérieur 48 du conteneur 4.

La tige centrale 130 peut faire saillie selon l'axe longitudinal X perpendiculaire au plan contenant le support de levage 1. La tige centrale 130 longitudinale du pion intermédiaire 13 peut être mise en place en face des orifices supérieurs 48 lorsque le support de levage 1 est dans la deuxième position, de sorte à pouvoir être insérée dans les orifices supérieurs 48 du conteneur 4. La tige centrale 130 peut présenter une forme sensiblement cylindrique autour de l'axe longitudinal X, ou toute autre forme envisageable.

Chaque pion intermédiaire 13 est mobile en rotation dans une lumière 152 du support de levage 1 de manière à pouvoir passer d'une position d'insertion dans l'orifice supérieur 48 dans laquelle le pion intermédiaire 13 est libre en translation dans l'orifice supérieur 48, à une position verrouillée dans laquelle le pion intermédiaire 13 est bloqué en translation dans l'orifice supérieur 48.

La position d'insertion et la position verrouillée du pion intermédiaire 13 peuvent correspondre à des orientations du pion intermédiaire 13 autour de l'axe longitudinal X séparées d'un angle d'environ 90°. Le pion intermédiaire 13 peut donc être engagé dans l'orifice supérieur 48, puis pivoté à 90°, de sorte à le verrouiller dans l'orifice supérieur 48.

Dans la position d'insertion, illustrée à titre d'exemple non limitatif en figure 5a, le pion intermédiaire 13 peut être engagé ou désengagé de l'orifice supérieur 48 par une translation longitudinale vers l'avant ou vers l'arrière du support de levage 1.

Dans la position verrouillée, illustrée à titre d'exemple non limitatif en figure 5b, le pion intermédiaire 13 ne peut pas être engagé ni désengagé de l'orifice supérieur 48, le pion intermédiaire 13 une fois inséré dans l'orifice supérieur 48 étant verrouillé dans l'orifice supérieur 48 et sa translation longitudinale étant bloquée. Lorsque le pion intermédiaire 13 est verrouillé, sa translation longitudinale est bloquée. Ainsi, lorsque le pion intermédiaire 13 est inséré dans l'orifice supérieur 48 et est pivoté dans la position verrouillée, le support de levage 1 est mis en place et fixé sur le conteneur 4, de sorte qu'un déplacement du support de levage 1 entraîne un déplacement du conteneur 4.

Le pion intermédiaire 13 peut être verrouillé dans l'orifice supérieur 48 du conteneur 4 par tout mode de verrouillage envisageable. En particulier, chaque pion intermédiaire 13 peut comprendre une excroissance radiale 140 de la tige centrale 130 adaptée pour assurer un verrouillage par un montage de type à baïonnette lorsque le pion intermédiaire 13 est inséré et pivoté dans l'orifice complémentaire supérieur 48 du conteneur 4.

L'excroissance radiale 140 peut être rapportée sur la tige centrale 130 longitudinale du pion intermédiaire 13, ou être usinée à la masse avec la tige centrale 130. L'excroissance radiale 140 s'étend sensiblement radialement par rapport à la tige centrale 130.

L'orifice supérieur 48 du conteneur 4 peut présenter une forme sensiblement allongée suivant la direction verticale. L'excroissance radiale 140 peut s'étendre sur une portion angulaire restreinte de la tige centrale 130 sensiblement cylindrique, en particulier s'étendre sensiblement en-dessous et/ou au-dessus de la tige centrale 130 lorsque celle-ci est mise en place en face de l'orifice supérieur 48. La hauteur de l'ensemble formé par la tige centrale 130 et l'excroissance radiale 140 peut correspondre sensiblement à la hauteur de l'orifice supérieur 48 allongé.

Ainsi, lorsque le pion intermédiaire 13 dans la position d'insertion est déplacé vers l'arrière, l'excroissance radiale 140 pénètre dans l'orifice supérieur 48 sans bloquer l'insertion du pion intermédiaire 13 dans l'orifice supérieur 48, en particulier dans l'orifice supérieur 48 de la face avant 41 du conteneur 4. En revanche, lorsque le pion intermédiaire 13 est pivoté dans la position verrouillée, la dimension latérale de l'ensemble formé par la tige centrale 130 et l'excroissance radiale 140 une fois pivotée est supérieure à celle de l'orifice supérieur 48 allongé. Lorsque le support de levage 1 exerce une force de traction vers l'avant, l'excroissance radiale 140 entre alors en contact avec la face avant 41 du conteneur 4 à proximité de l'orifice supérieur 48 allongé, et bloque la translation longitudinale du pion intermédiaire 13 de sorte que le pion intermédiaire 13 ne peut pas être désengagé de l'orifice supérieur 48.

Le pion intermédiaire 13, en particulier sa tige centrale 130 longitudinale, peut présenter une première extrémité 131 adaptée pour être insérée dans l'orifice supérieur 48, et une deuxième extrémité 132 opposée à la première extrémité 131.

La deuxième extrémité 132 du pion intermédiaire 13 peut être en forme sensiblement de demi-lune. Lorsque la tige centrale 130 du pion intermédiaire 13 est cylindrique, la deuxième extrémité 132 peut correspondre au demi-cylindre de la tige centrale 130.

Le support de levage 1 peut présenter une lumière 151, 152 de logement de pion intermédiaire 13 comprenant une partie en trois quarts de cercle, le dernier quart de cercle étant plein. Lorsque le pion intermédiaire 13, en particulier la deuxième partie de la tige principale 130, est engagé dans la lumière 151, 152, la demi-lune de la deuxième extrémité 132 du pion intermédiaire 13 est engagée dans la partie en trois quarts de cercle de la lumière 151, 152.

Ainsi, le dernier quart de cercle plein forme une butée empêchant la rotation du pion intermédiaire 13 au-delà de 0° et de 90°. Le pion intermédiaire 13 est donc mobile en rotation entre la position d'insertion, correspondant à une rotation de 0°, et la position verrouillée, correspondant à une rotation de 90°.

Chaque pion intermédiaire 13 peut comprendre une extrémité 170 montée libre à rotation autour de et coaxialement à la tige centrale 130. L'extrémité 170 peut être une pièce sensiblement cylindrique présentant des dimensions sensiblement complémentaires de celles de la première extrémité 131 du pion intermédiaire 13, en particulier de la première partie de la tige centrale 130 au niveau de la première extrémité 131.

L'extrémité 170 peut être rapportée autour de la tige centrale 130 du pion intermédiaire 13, au niveau de sa première extrémité 131. La première extrémité 131 du pion intermédiaire 13 peut présenter des dimensions réduites par rapport au reste de la tige centrale 130, de sorte que l'ensemble formé par la première extrémité 131 et l'extrémité 170 présente des dimensions sensiblement similaires à celles du reste de la tige centrale 130. L'extrémité 170 ne gêne donc pas l'insertion du pion intermédiaire 13 dans l'orifice supérieur 48.

L'extrémité 170 permet de limiter les frottements lors de la rotation du pion intermédiaire 13 dans l'orifice supérieur 48. Ainsi, un petit effort suffit à entraîner le pion intermédiaire 13 en rotation pour assurer le verrouillage du pions intermédiaire 13 dans l'orifice supérieur 48. La rotation du pion intermédiaire 13 peut donc être réalisée manuellement par la simple force physique d'un opérateur, y compris lorsque le pion intermédiaire 13 est au contact de l'orifice supérieur 48.

Le support de levage 1 peut comprendre en outre un graisseur de pointe folle 171, ainsi qu'illustrée à titre d'exemple non limitatif en figure 3b. Le graisseur de pointe folle 171 est adapté pour assurer un graissage de l'extrémité 170, par exemple par le biais d'une alimentation en huile entre la tige centrale 130 du pion intermédiaire 13 au niveau de sa première extrémité 131 et l'extrémité 170. Le graisseur de pointe folle 171 permet de limiter encore davantage les frottements entre l'extrémité 170 et la tige centrale 130 du pion intermédiaire 13 lors de la rotation du pion intermédiaire 13 dans l'orifice supérieur 48.

Chaque pion intermédiaire 13 peut comprendre un contrepoids 160 et un balancier 150 situés de part et d'autre de la tige centrale 130 et solidaires de la tige centrale 130. Le contrepoids 160 et le balancier 150 peuvent être soudés sur la tige centrale 130, usinés avec la tige centrale 130, ou rapportés sur la tige centrale 130 par tout autre moyen. Le contrepoids 160 et le balancier 150 peuvent être situés entre la première extrémité 131 et la deuxième extrémité 132 du pion intermédiaire 13.

Le contrepoids 160 et le balancier 150 peuvent être situés en une position longitudinale sensiblement intermédiaire sur la tige centrale 130 et délimiter d'un côté une première partie de la tige centrale 130 destinée à être insérée dans l'orifice supérieur 48, et de l'autre côté une deuxième partie de la tige centrale 130 destinée à être insérée dans une lumière 152 du support de levage 1.

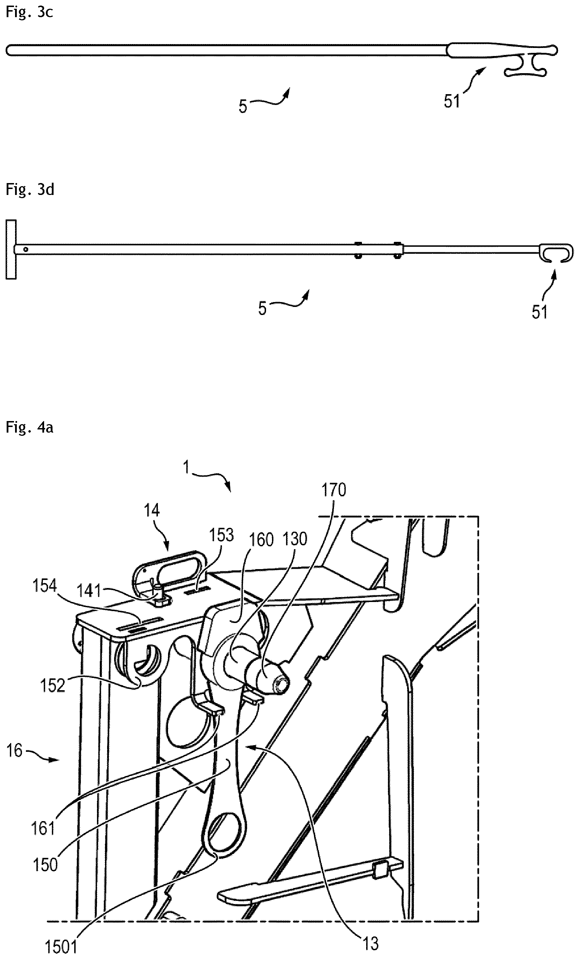

Le balancier 150 peut comporter un anneau de préhension 1501 adapté pour permettre une préhension du balancier 150 par des moyens de préhension, tels qu'un crochet 51 d'une perche 5. Des exemples non limitatifs de perche 5 sont illustrés en figures 3c et 3d. Le balancier 150 est alors adapté pour être pivoté manuellement autour de l'axe longitudinal X par le biais d'une perche 5 comportant un crochet 51 en prise avec l'anneau de préhension 1501. La rotation du balancier 150 entraîne une rotation correspondante du pion intermédiaire 13 entre la position d'insertion et la position verrouillée.

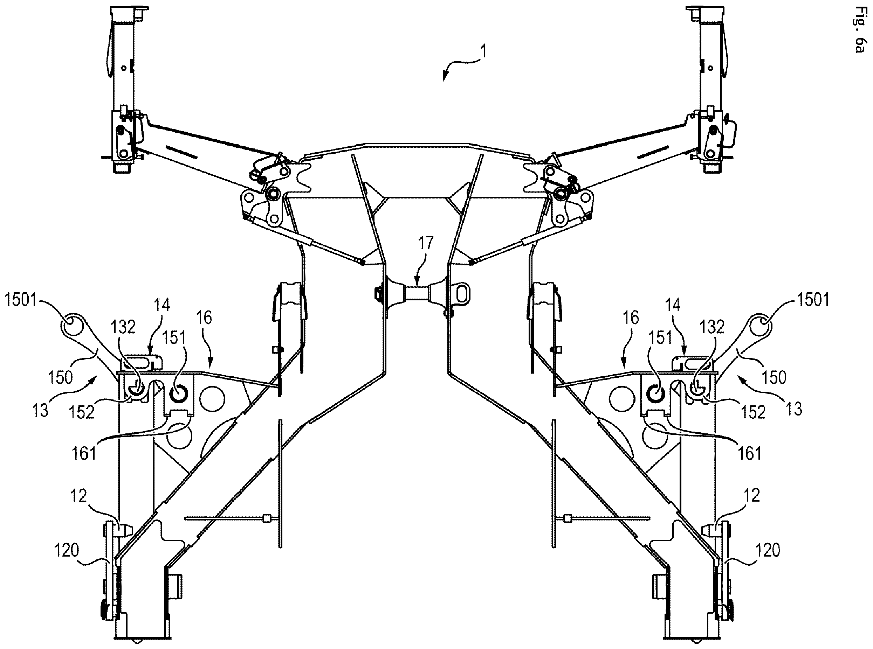

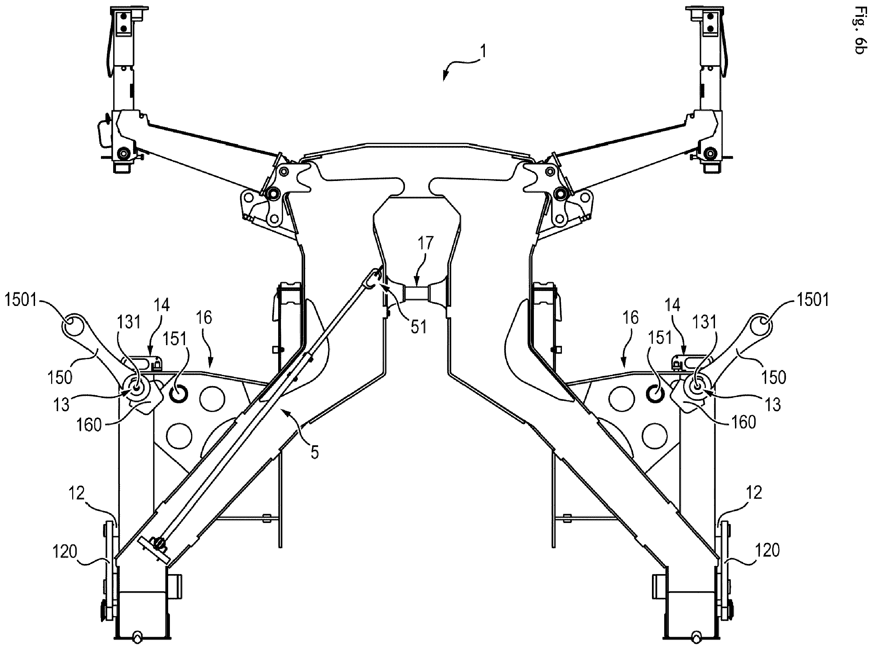

Un exemple de perche 5 stockée sur le support de levage 1 est illustré en figure 6a. La perche 5 peut être rapportée sur la partie inférieure du support de levage 1, du côté du conteneur 4 par rapport au plan du support de levage 1.

Le balancier 150 peut s'étendre sensiblement radialement par rapport à la tige centrale 130 du pion intermédiaire 13. L'anneau de préhension 1501 est formé dans une extrémité du balancier opposée à l'extrémité du balancier qui est fixée sur le pion intermédiaire 13. Le balancier 150 présente une longueur suffisante pour être crochetée par un crochet 51 de perche 5. Par exemple, le balancier 150 peut présenter une longueur d'environ 30 cm à 60 cm, de préférence d'environ 40 cm à 50 cm.

Le balancier 150 peut être actionné manuellement entre la position d'insertion et la position verrouillée, en particulier par un opérateur au sol tenant la perche 5. L'actionnement du balancier 150 vers la position verrouillée entraîne un verrouillage du pion intermédiaire 13 dans l'orifice supérieur 48, sa translation longitudinale étant bloquée. L'actionnement du balancier 150 vers la position d'insertion entraîne un déverrouillage du pion intermédiaire 13 dans l'orifice supérieur 48.

Le contrepoids 160 peut présenter une masse supérieure à la masse du balancier 150, de sorte que lorsque le pion intermédiaire 13 est dans la position d'insertion, le centre de gravité du pion intermédiaire 13 se trouve en-dessous de l'axe de rotation longitudinal X du pions intermédiaire 13.

Le contrepoids 160 présente ainsi une masse adaptée pour ajuster la position du centre de gravité du pion intermédiaire 13, en particulier pour compenser la masse du balancier 150. Par conséquent, le contrepoids 160 tend à maintenir le pion intermédiaire 13 en place dans la position d'insertion dans l'orifice supérieur 48 lorsqu'il n'est pas manœuvré en rotation. Le contrepoids 160 empêche que le simple effet de la gravité entraîne une rotation du pion intermédiaire 13 depuis la position d'insertion vers la position verrouillée, en particulier lorsque peu de frottements s'opposent à la rotation du pion intermédiaire 13, sans toutefois empêcher la rotation du pion intermédiaire 13 par la simple force physique d'un opérateur.

Le contrepoids 160 peut présenter une masse légèrement supérieure à la masse du balancier 150 et être orienté vers le bas lorsque le pion intermédiaire 13 est dans la position d'insertion, le balancier 150 étant orienté vers le haut.

En particulier, dans la position d'insertion du pion intermédiaire 13, le contrepoids 160 peut être orienté en diagonale vers l'intérieur et le bas du conteneur 4, et le balancier 150 être orienté en diagonale vers l'extérieur et le haut du conteneur 4.

Ainsi, le centre de gravité du pion intermédiaire 13 dans la position d'insertion se trouve légèrement en-dessous de l'axe de rotation longitudinal X du pion intermédiaire 13 dans l'orifice supérieur 48.

Chaque pion intermédiaire 13 peut être formé dans un matériau présentant une résistance aux contraintes élevée afin que les deux pions intermédiaires 13 permettent de soulever le conteneur 4 sans endommager les pions 13 ni les déformer. Chaque pion intermédiaire 13 peut par exemple être formé dans un acier à haute résistance et haute limite élastique.

L'excroissance radiale 140 peut être située entre la première extrémité 131 du pion intermédiaire 13 et l'ensemble formé par le balancier 150 et le contrepoids 160, en particulier entre l'extrémité 170 et l'ensemble formé par le balancier 150 et le contrepoids 160. Le balancier 150 peut s'étendre dans une direction sensiblement similaire à la direction de l'excroissance radiale 140 et opposée à celle du contrepoids 160.

Le support de levage 1 peut comprendre en outre deux structures supplémentaires 16 rapportées sur le support de levage 1, par exemple par soudage. Chaque pion intermédiaire 13 peut être rapportée directement sur le support de levage 1, ou être rapporté sur une structure supplémentaire 16. Ainsi, les pions intermédiaires 13 peuvent être intégrés à un support de levage 1 existant, sans nécessiter une modification importante du support de levage 1 ou un coût d'intégration important.

Les structures supplémentaires 16 sont positionnées sur le support de levage 1 de manière symétrique l'une par rapport à l'autre par rapport à la direction verticale, et sont dimensionnées pour assurer la mise en place du pion intermédiaire 13 en face des orifices supérieurs 48 lorsque le support de levage 1 est dans la deuxième position.

Une structure supplémentaire 16 peut comprendre une première lumière 151 de pion intermédiaire 13 une deuxième lumière 152 de pion intermédiaire 13, les lumières 151 et 152 étant illustrées à titre d'exemple non limitatif notamment en figures 4a à 4c.

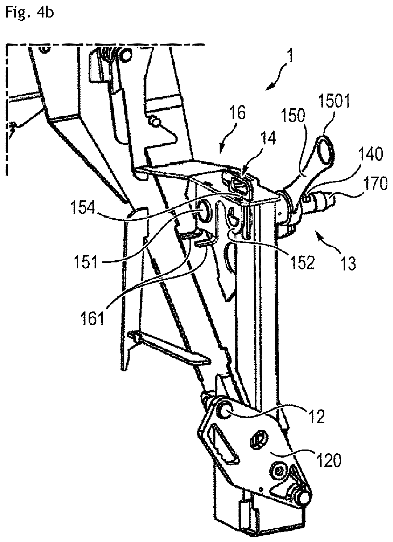

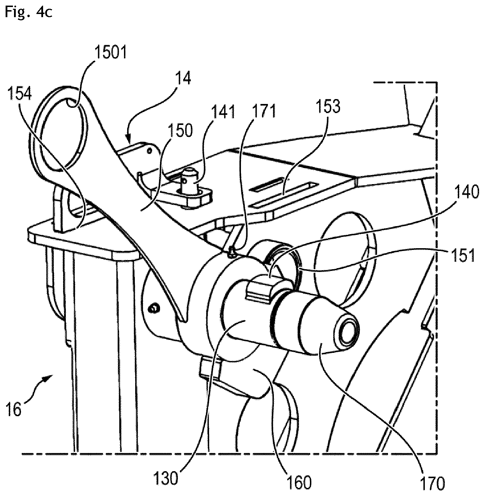

Un pion intermédiaire 13 peut être inséré de manière amovible, par exemple le biais d'une translation longitudinale, soit dans la première lumière 151, le support de levage 1 étant alors dans une position de levage quatre points, soit dans la deuxième lumière 152, le support de levage 1 étant alors dans une position de levage deux points. Un pion intermédiaire 13 dans la position de levage quatre points est illustrée à titre d'exemple non limitatif en figures 2a, 2b et 4a. Un pion intermédiaire 13 dans la position de levage deux points est illustrée à titre d'exemple non limitatif en figures 4b, 4c, 5a et 5b.

La deuxième lumière 152 peut présenter une partie en trois quarts de cercle adaptée pour bloquer la rotation du pion intermédiaire 13 au-delà de la position d'insertion et de la position verrouillée, et une deuxième partie sensiblement circulaire de dimensions sensiblement complémentaires des dimensions de la tige centrale 130 du pion intermédiaire 13.

Lorsque le support de levage 1 est dans la position de levage quatre points et est positionné vis-à-vis du conteneur, le pion intermédiaire 13 inséré dans la première lumière 151 s'étend globalement du côté opposé au conteneur 4 par rapport au plan du support de levage 1, la deuxième extrémité 132 du pion intermédiaire 13 étant plus proche du conteneur 4 que sa première extrémité 131.

La position de levage quatre points permet en particulier d'éviter que le pion intermédiaire 13 tape contre le conteneur 4 lors d'une manipulation du conteneur 4 par le biais des deux pions inférieurs 12 et des deux pions supérieurs 11 du support de levage 1. Les quatre pions supérieurs 11 et inférieurs 12 forment alors les quatre points de levage du conteneur 4.

Le pion intermédiaire 13 dans la position de levage quatre points peut être orienté de sorte que le balancier 150 soit dirigé à la verticale vers le bas, le balancier 150 étant globalement en-dessous de la tige centrale 130, tandis que le contrepoids 160 au-dessus de la tige centrale 130.

Le pion intermédiaire 13 peut être maintenu en position, la rotation longitudinale du pion intermédiaire 13 étant bloquée, par le biais de deux excroissances longitudinales 161 de la structure supplémentaire 16. Les excroissances longitudinales 161 peuvent être séparées latéralement d'une distance correspondant sensiblement à une dimension latérale du balancier 150 et s'étendent selon l'axe longitudinal X, de sorte à maintenir le balancier 150 en position.

Lorsque le support de levage 1 est dans la position de levage deux points est positionné vis-à-vis du conteneur, le pion intermédiaire 13 inséré dans la deuxième lumière 152 s'étend globalement du côté du conteneur 4 par rapport au plan du support de levage 1, la première extrémité 131 du pion intermédiaire 13 étant plus proche du conteneur 4 que sa deuxième extrémité 132. La première extrémité 131 du pion intermédiaire 13 peut alors être insérée dans l'orifice supérieur 48. Les deux pions intermédiaires 13 forment alors les deux points de levage du conteneur 4.

Le support de levage 1 peut comprendre en outre une fourchette 14 adaptée pour coopérer avec une rainure annulaire 133 de la tige centrale 130 du pion intermédiaire 13, de sorte que lorsque à maintenir le pion intermédiaire dans le support de levage 1.

Ainsi, lorsque la fourchette 14 est mise en place au contact de la rainure annulaire 133, la fourchette 14 bloque une translation longitudinale du pion intermédiaire 13 et autorise une rotation autour de l'axe longitudinal X du pion intermédiaire 13.

La rainure annulaire 133 peut être un renfoncement radial formé autour de la tige centrale 130, en particulier lorsque la tige centrale 130 est sensiblement cylindrique, du pion intermédiaire 13. La rainure annulaire 133 peut être formée à proximité de la deuxième extrémité 132 du pion intermédiaire 13.

La fourchette 14 peut comprendre deux branches adaptées pour être mises en place d'un côté ou de l'autre de la structure supplémentaire 16 du support de levage 1 par rapport au plan défini par le support de levage 1.

La fourchette 14 peut être rapportée de manière amovible sur la structure supplémentaire 16, en particulier par insertion dans ou dégagement hors d'une première gorge 153 ou d'une deuxième gorge 154 de la structure intermédiaire. Lorsque la fourchette 14 est mise en place sur la structure supplémentaire 16, ses deux branches sont sensiblement verticales.

La mise en place de la fourchette 14 dans la première gorge 153 ou dans la deuxième gorge 154 peut être renforcée par le biais d'un pion de mise en place 141, situé sensiblement entre la première gorge 153 et la deuxième gorge 154, et venant en prise avec un orifice correspondant formé dans une saillie longitudinale de la fourchette 14.

Lorsque le support de levage 1 est dans la position de levage quatre points, la fourchette 14 peut être insérée dans la première gorge 153 de la structure supplémentaire 16, de sorte que ses deux branches verticales s'étendent de part et d'autre de la première lumière 151. La translation longitudinale du pion intermédiaire 13 inséré dans la première lumière 151 est alors bloquée par la coopération entre la fourchette 14 et la rainure annulaire 133. Le pion intermédiaire 13 ne peut donc plus sortir de la première lumière 151. Pour sortir le pion intermédiaire 13 de la première lumière 151 par une translation longitudinale, la fourchette 14 doit au préalable être retirée de la première gorge 153.

Lorsque le support de levage 1 est dans la position de levage deux points, la fourchette 14 peut être insérée dans la deuxième gorge 154 de la structure supplémentaire 16, de sorte que ses deux branches verticales s'étendent de part et d'autre de la deuxième lumière 152 de la structure supplémentaire 16. La translation longitudinale du pion intermédiaire 13 inséré dans la deuxième lumière 152 est alors bloquée par la coopération entre la fourchette 14 et la rainure annulaire 133, tandis que la rotation du pion intermédiaire 13 dans la deuxième lumière 152 n'est pas bloquée. Le pion intermédiaire 13 ne peut donc pas sortir de la deuxième lumière 152, mais peut être actionné en rotation entre la position d'insertion et la position verrouillée afin d'assurer son verrouillage ou son déverrouillage dans l'orifice supérieur 48 du conteneur 4.

Le support de levage 1 peut comprendre en outre un ou plusieurs graisseurs de pion intermédiaire 13 adaptés pour assurer un graissage entre le pion de verrouillage et la structure supplémentaire 16. Ainsi, le pion intermédiaire 13 peut facilement être inséré ou désengagé de la première lumière 151 ou de la deuxième lumière 152 de la structure supplémentaire 16, les frottements étant limités par le graissage.

Le support de levage 1 présente une forme adaptée pour assurer une mise en place par rapport au conteneur 4 et un levage du conteneur 4, par exemple une forme en **H,** en X ou toute autre forme appropriée.

Le support de levage 1 peut présenter une forme sensiblement en X, le X comprenant deux branches définissant un plan sensiblement vertical lorsque le support de levage 1 dans la deuxième position vis-à-vis du conteneur 4. Les deux pions supérieurs 11 sont situés au niveau des extrémités supérieures des deux branches du X et les deux pions inférieurs 12 sont situés au niveau des extrémités inférieures des deux branches du X.

Le support de levage 1 peut être actionné d'une position de travail à une position de transport en repliant les parties supérieures des deux branches du X vers le bas. L'encombrement du support de levage 1 dans la position de transport est ainsi limité, le support de levage 1 présentant donc des dimensions compatibles d'un transport, par exemple ferroviaire ou en avion. La figure 2b illustre un exemple de support de levage 1 en forme de X, la partie supérieure de l'une des branches du X étant repliée.

Le support de levage 1 est actionné de la position de transport à la position de travail en dépliant les parties supérieures des deux branches du X vers le haut.

La structure supplémentaire 16 peut être rapportée, par exemple soudée, sur les branches inférieures du X. La structure supplémentaire 16 peut être en forme d'équerre, l'équerre présentant une première partie sensiblement verticale s'étendant sensiblement au droit des pions inférieurs 12, au-dessus de ceux-ci, et une deuxième partie sensiblement latérale. La jonction entre la première partie et la deuxième partie de l'équerre définit un coin supérieur de l'équerre adapté pour assurer une mise en place de chaque pion intermédiaire 13.

La forme en équerre de la structure supplémentaire 16 et sa disposition sur les branches inférieures du X permet de ne pas augmenter la hauteur totale du support de levage 1. Ainsi, le support de levage 1 reste compatible des dimensions nécessaires au transport du camion, par exemple par transport ferroviaire dans des tunnels, ou encore par transport aérien dans des avions. Par ailleurs, l'équerre est située en une position suffisamment inférieure sur le support de levage 1 pour ne pas empêcher un repliement des parties supérieures des deux branches du support de levage 1 en X dans la position de transport.

Le support de levage 1 de conteneur 4 peut comprendre en outre un élément d'accrochage 17 adapté pour permettre un accrochage du support de levage 1 à un bras de levage 2, ledit bras de levage 2 permettant alors de déplacer le support de levage.

Le bras de levage 2 peut être raccordé à un camion porte-conteneur 3 comprenant un dispositif de commande du levage permettant à un opérateur de contrôler un déplacement du bras de levage 2. Le bras de levage 2 peut comprendre un crochet adapté pour crocheter l'élément d'accrochage 17.

L'élément d'accrochage 17, illustré à titre d'exemple non limitatif en figures 2b, 5a et 5b, peut comprendre une barre d'accrochage. La barre d'accrochage peut être une barre latérale, c'est-à-dire orientée sensiblement dans la direction latérale lorsque le support de levage 1 est dans la deuxième position. La barre d'accrochage 17 peut être située sensiblement à mi-hauteur du support de levage 1.

La barre d'accrochage 17 est adaptée pour être crochetée par un crochet du bras de levage 2. En particulier, le crochet du bras de levage 2 peut être mis en place et verrouillé, par exemple par un verrouillage par le biais d'un vérin mécanique ou pneumatique, autour de la barre d'accrochage 17.

Le support de levage 1 est mobile en rotation autour de la barre d'accrochage 17 par rapport au bras de levage 2 et solidaire du bras de levage 2 en translation selon les directions verticale et longitudinale.

Les deux pions intermédiaires 13 peuvent être situés en-dessous de l'élément d'accrochage 17. En, particulier, la structure supplémentaire 16 peut être rapportée entre les pions inférieurs 12 et l'élément d'accrochage 17, les pions intermédiaires 13 étant rapportés sur un coin supérieur de la structure supplémentaire 16.

Lorsque le support de levage 1 est verrouillé par rapport au conteneur 4 dans la deuxième position, une force exercée vers l'avant par le bras de levage 2 tend alors à faire basculer le support de levage 1 vers l'avant, c'est-à-dire à déplacer les pions inférieurs 12 du support de levage 1 vers l'arrière. Les pions inférieurs 12 du support de levage 1 dans la deuxième position peuvent être situés à distance de la face avant 41 du conteneur 4, ou être plaqués contre la face avant 41 du conteneur 4. La face avant 41 du conteneur 4 bloque alors un déplacement vers l'arrière des pions inférieurs 12 du support de levage 1, ce qui assure la mise en place du support de levage 1 au contact de la face avant 41 du conteneur 4 et évite un basculement du support de levage 1, c'est-à-dire une rotation du support de levage 1 autour de l'élément d'accrochage 17.

En variante, les pions intermédiaires 13 peuvent être situés au-dessus de l'élément d'accrochage 17.

Le cas échéant, lorsque le support de levage 1 comporte une structure supplémentaire 16 en équerre sur laquelle sont rapportés les pions intermédiaires 13, les premières parties sensiblement verticales de l'équerre peuvent également être soit à distance, soit plaquées contre la face avant 41 du conteneur 4 de sorte à contribuer à empêcher un basculement du support de levage 1.

Par ailleurs, ce plaquage des pions inférieurs 12 et le cas échéant de la structure supplémentaire 16 contre la face avant 41 du conteneur 4 peut également permettre de répartir les efforts exercés sur les orifices supérieurs 48 du conteneur 4 lors du déplacement du support de levage 1 en vue du dégagement des coins inférieurs du conteneur 4, de sorte à diminuer les efforts exercés au niveau de chaque orifice supérieur 48.

Un appareil de levage hydraulique de conteneur 4 peut comprendre un support de levage 1 et un bras de levage 2 tels que décrit ci-dessus. L'appareil de levage hydraulique peut comprendre en outre des moyens de déplacement hydraulique du support de levage, par exemple un camion porte-conteneur 3.

### Procédé de levage hydraulique de conteneur 4

Le procédé de levage hydraulique d'un conteneur 4 est adapté pour être mis en œuvre à l'aide d'un support de levage tel que décrit ci-dessus. Le procédé comprend les étapes suivantes :
- mise en place du support de levage 1 dans la deuxième position vis-à-vis d'un conteneur 4,
- insertion des pions intermédiaires 13 dans des orifices complémentaires supérieurs 48 du conteneur 4,
- verrouillage des pions intermédiaires 13 dans les orifices supérieurs 48 par un pivotement des pions intermédiaires 13 dans les orifices supérieurs 48,
- déplacement du conteneur 4 par le biais d'un déplacement hydraulique du support de levage 1.

En particulier, l'excroissance radiale 140 du pion intermédiaire 13 s'engage dans l'orifice supérieur 48 du conteneur 4 lors de l'insertion du pion intermédiaire 13 dans l'orifice supérieur 48.

Le verrouillage des pions intermédiaires 13 dans les orifices supérieurs 48 peut être réalisé par un pivotement des pions intermédiaires 13 dans les orifices supérieurs 48 entre la position d'insertion et la position verrouillée.

Le pivotement autour de l'axe longitudinal X peut être effectué manuellement par un opérateur à l'aide d'une perche 5 comprenant un crochet 51 coopérant avec le pion intermédiaire 13. En particulier, le procédé peut comprendre une étape de crochetage d'un anneau de préhension 1501 du balancier 150 de chaque pion intermédiaire 13 par le crochet 51 d'une perche 5 une fois le pion intermédiaire 13 inséré dans l'orifice supérieur 48. La perche 5 peut être tenue par un opérateur au sol, et pivotée par l'opérateur au sol.

Une fois les pions intermédiaires 13 verrouillés dans les orifices supérieurs 48, le support de levage 1 est déplacé hydrauliquement pour lever le conteneur 4, par exemple pour dégager les coins inférieurs du conteneur 4. Le conteneur 4 peut en particulier être soulevé et/ou tiré vers l'avant. Le conteneur 4 peut être soulevé temporairement et tiré sur une courte distance, par exemple de l'ordre de 0 mètres à 3 mètres.

Une fois le conteneur 4 soulevé, une entretoise peut être placée entre la face inférieure 45 du conteneur 4 et le sol. Le conteneur 4 est alors maintenu à distance du sol par l'entretoise. Ainsi, la partie inférieure du conteneur 4 reste dégagée quelles que soient les conditions météo, et les orifices bas 47 du conteneur 4 peuvent si nécessaire être dégagés et/ou nettoyés facilement. Le support de levage 1 peut également facilement être mis en place dans la première position vis-à-vis du conteneur 4.

Le procédé peut comprendre en outre des étapes de :
- déverrouillage des pions intermédiaires 13 et retrait des pions intermédiaires 13 des orifices supérieurs 48,
- déplacement du support de levage 1 de sorte à le positionner dans la deuxième position vis-à-vis du conteneur 4,
- insertion et le cas échéant verrouillage des deux pions supérieurs 11 et des deux pions inférieurs 12 du support de levage 1 dans les orifices complémentaires 46, 47 du conteneur 4,
- déplacement du conteneur 4 par le biais d'un déplacement hydraulique du support de levage 1, de sorte à assurer un levage du conteneur 4.

Ces étapes supplémentaires peuvent par exemple être effectuées une fois que les coins inférieurs du conteneur 4 sont dégagés. Les pions supérieurs 11 et inférieurs 12 peuvent être mis en place et le cas échéant verrouillés dans les orifices complémentaires hauts 46 et bas 47 du conteneur 4. Le bras de levage 2 est ensuite actionné hydrauliquement pour déplacer le support de levage 1, donc le conteneur 4, par exemple pour le tirer et le monter sur un camion porte-conteneur 3.

En particulier, le support de levage 1, initialement dans la première position, peut être abaissé par le bras de levage 2 de sorte à engager les pions supérieurs 11 dans les orifices de la face supérieure 44 du conteneur 4. Puis, les pions inférieurs 12 peuvent être engagés dans les orifices des faces latérales 43, et y être verrouillés.

Le procédé peut comprendre en outre une étape de passage du support de levage 1 de la position de levage deux points à la position de levage quatre points. Cette étape peut être réalisée antérieurement à un levage du conteneur 4 par le biais des pions supérieurs 11 et inférieurs 12, de sorte à ce que les pions intermédiaires 13 n'entre pas en contact avec le conteneur 4, en particulier avec sa face avant 41, lorsque le support de levage 1 est dans la première position. Le passage du support de levage 1 de la position de levage deux points à la position de levage quatre points peut comprendre les étapes suivantes, réalisées pour chaque fourchette 14 et pion intermédiaire 13 :
- retrait de la fourchette 14 hors de la deuxième gorge 154, en particulier par une translation verticale vers le haut de la fourchette 14,
- translation longitudinale du pion intermédiaire 13 de sorte à le dégager de la deuxième lumière 152 de la structure supplémentaire 16,
- translation longitudinale du pion intermédiaire 13 de sorte à l'engager dans la première lumière 151 de la structure supplémentaire 16,
- mise en place de la fourchette 14 dans la première gorge 153, en particulier par une translation verticale vers le bas de la fourchette 14.

Le procédé peut en outre comprendre une étape de passage du support de levage 1 de la position de levage quatre points à la position de levage deux points. Cette étape peut être réalisée antérieurement à un levage du conteneur 4 par le biais des pions intermédiaires 13, de sorte que les pions intermédiaires 13 soient positionnés face aux orifices supérieurs 48 du conteneur 4. Le passage du support de levage 1 de la position de levage quatre points à la position de levage deux points peut comprendre les étapes inverses du passage du support de levage 1 de la position de levage deux points à la position de levage quatre points.

Le procédé peut comprendre en outre les étapes suivantes, réalisées avant la mise en place du support de levage 1 vis-à-vis du conteneur 4 :
- accrochage du crochet du bras de levage 2 au niveau d'une barre d'accrochage 17 du support de levage 1,
- déplacement hydraulique du support de levage 1 de sorte à le décrocher de son support et à le basculer par une rotation à 180° vers l'arrière, ce déplacement étant adapté pour positionner le support de levage 1 dans la première position ou dans la deuxième position vis-à-vis du conteneur 4. Le support de levage 1 peut être posé au sol lors de cette étape.

## Revendications

1. Support de levage (1) de conteneur (4), comprenant :
- deux pions supérieurs (11) et deux pions inférieurs (12), adaptés pour être insérés dans des orifices complémentaires (46, 47) du conteneur (4) lorsque le support de levage (1) est dans une première position vis-à-vis du conteneur (4),
- deux pions intermédiaires (13) adaptés pour être insérés dans deux orifices complémentaires supérieurs (48) du conteneur (4) lorsque le support de levage (1) est dans une deuxième position vis-à-vis du conteneur (4),
le support de levage étant **caractérisé en ce que** les deux pions intermédiaires (13) sont positionnés entre les deux pions supérieurs (11) et les deux pions inférieurs (12).

2. Support de levage (1) de conteneur (4) selon la revendication 1, dans lequel chaque pion intermédiaire (13) comprend une tige centrale (130) destinée à être insérée dans un orifice supérieur (48) du conteneur (4), et dans lequel chaque pion intermédiaire (13) est mobile en rotation dans une lumière (152) du support de levage (1) de manière à pouvoir passer d'une position d'insertion dans l'orifice supérieur (48) dans laquelle le pion intermédiaire (13) est libre en translation dans l'orifice supérieur (48), à une position verrouillée dans laquelle le pion intermédiaire (13) est bloqué en translation dans l'orifice supérieur (48).

3. Support de levage (1) de conteneur (4) selon l'une des revendications 1 ou 2, dans lequel chaque pion intermédiaire (13) comprend une excroissance radiale (140) de la tige centrale (130) adaptée pour assurer un verrouillage par un montage de type à baïonnette lorsque le pion intermédiaire (13) est inséré et pivoté dans l'orifice complémentaire supérieur (48) du conteneur (4).

4. Support de levage (1) de conteneur (4) selon l'une des revendications 2 ou 3, dans lequel chaque pion intermédiaire (13) comprend une extrémité (170) montée libre en rotation autour de la tige centrale (130) et coaxialement à la tige centrale (130).

5. Support de levage (1) de conteneur (4) selon l'une des revendications 2 à 4, dans lequel chaque pion intermédiaire (13) comprend un contrepoids (160) et un balancier (150) situés de part et d'autre de la tige centrale (130) et solidaires de la tige centrale (130).

6. Support de levage (1) de conteneur (4) selon la revendication 5, dans lequel le balancier (150) comporte un anneau de préhension (1501) adapté pour permettre une préhension du balancier (150) par des moyens de préhension.

7. Support de levage (1) de conteneur (4) selon l'une des revendications 5 ou 6, dans lequel le contrepoids (160) présente une masse supérieure à la masse du balancier (150), dans lequel lorsque le pion intermédiaire (13) est dans la position d'insertion, le centre de gravité du pion intermédiaire (13) se trouve en-dessous de l'axe de rotation longitudinal (X) du pion intermédiaire (13).

8. Support de levage (1) de conteneur (4) selon l'une des revendications 2 à 7, comprenant en outre une fourchette (14) adaptée pour coopérer avec une rainure annulaire (133) de la tige centrale (130) du pion intermédiaire (13), de sorte à maintenir le pion intermédiaire dans le support de levage (1).

9. Support de levage (1) de conteneur (4) selon l'une des revendications 1 à 8, dans lequel le support de levage (1) présente une forme sensiblement en X, les deux pions supérieurs (11) étant situés au niveau des extrémités supérieures des deux branches du X et les deux pions inférieurs (12) étant situés au niveau des extrémités inférieures des deux branches du X.

10. Support de levage (1) de conteneur (4) selon l'une des revendications 1 à 9, comprenant en outre un élément d'accrochage (17) adapté pour permettre un accrochage du support de levage (1) à un bras de levage (2), ledit bras de levage (2) permettant alors de déplacer le support de levage (1).

11. Appareil de levage hydraulique de conteneur (4) comprenant un support de levage (1) selon l'une des revendications 1 à 10 et un bras de levage (2).

12. Appareil de levage hydraulique de conteneur (4) selon la revendication 11, dans lequel l'élément d'accrochage (17) est une barre d'accrochage adaptée pour être crochetée par un crochet du bras de levage (2), le support de levage (1) étant mobile en rotation autour de la barre d'accrochage (17).

13. Procédé de levage hydraulique de conteneur (4) adapté pour être mis en œuvre à l'aide d'un support de levage (1) selon l'une des revendications 1 à 10, le procédé comprenant les étapes suivantes :
- mise en place du support de levage (1) dans la deuxième position vis-à-vis d'un conteneur (4),
- insertion des pions intermédiaires (13) dans des orifices complémentaires supérieurs (48) du conteneur (4),
- verrouillage des pions intermédiaires (13) dans les orifices supérieurs (48) par un pivotement des pions intermédiaires (13) dans les orifices supérieurs (48),
- déplacement du conteneur (4) par le biais d'un déplacement hydraulique du support de levage (1).

## Patentansprüche

1. Hebehalterung (1 ) für einen Behälter (4), umfassend :
- zwei oberen Bolzen (11) und zwei unteren Stiften (12), die dazu geeignet sind, in komplementäre Öffnungen (46, 47) des Behälters (4) eingeführt zu werden, wenn sich die Hebehalterung (1) in einer ersten Position gegenüber dem Behälter (4) befindet,
- zwei Zwischenbolzen, die dazu geeignet sind, in zwei obere komplementäre Öffnungen (48) des Behälters (4) eingeführt zu werden, wenn sich die Hebehalterung (1) in einer zweiten Position gegenüber dem Behälter (4) befindet, wobei die Hebehalterung **dadurch gekennzeichnet ist, dass** die beiden Zwischenbolzen (13) zwischen den beiden oberen Bolzen (11) und den beiden unteren Bolzen (12) positioniert sind.

2. Hebehalterung (1) für einen Behälter (4) nach Anspruch 1, wobei jeder Zwischenbolzen (13) eine zentrale Stange (130) umfasst, der dazu bestimmt ist, in eine obere Öffnung (48) des Behälters (4) eingeführt zu werden, und wobei jeder Zwischenbolzen (13) in einer Aussparung (152) der Hebehalterung (1) drehbar ist, so dass er von einer Einführposition in die obere Öffnung (48), in der der Zwischenbolzen (13) frei in der oberen Öffnung (48) durch Verschieben beweglich ist, in eine verriegelte Position übergehen kann, in der der Zwischenbolzen (13) in der oberen Öffnung (48) gegen eine Verschiebung blockiert ist.

3. Hebehalterung (1) für einen Behälter (4) nach einem der Ansprüche 1 oder 2, wobei jeder Zwischenbolzen (13) einen radialen Vorsprung (140) der zentralen Stange (130) umfasst, der so beschaffen ist, dass er eine Verriegelung durch eine bajonettartige Montage gewährleistet, wenn der Zwischenbolzen (13) in die obere komplementäre Öffnung (48) des Behälters (4) eingeführt und darin geschwenkt wird.

4. Hebehalterung (1) für einen Behälter (4) nach einem der Ansprüche 2 oder 3, wobei jeder Zwischenbolzen (13) ein Ende (170) aufweist, das frei drehbar um die zentrale Stange (130) und koaxial zu der zentralen Stange (130) montiert ist.

5. Hebehalterung (1) für einen Behälter (4) nach einem der Ansprüche 2 bis 4, wobei jeder Zwischenbolzen (13) ein Gegengewicht (160) und ein Pendel (150) umfasst, die sich auf beiden Seiten der zentralen Stange (130) befinden und fest mit der zentralen Stange (130) verbunden sind.

6. Hebehalterung (1) für einen Behälter (4) nach Anspruch 5, wobei das Pendel (150) einen Greifring (1501) aufweist, der so beschaffen ist, dass er ein Greifen des Pendels (150) durch Greifmittel ermöglicht.

7. Hebehalterung (1) für einen Behälter (4) nach einem der Ansprüche 5 oder 6, wobei das Gegengewicht (160) eine Masse aufweist, die größer ist als die Masse des Pendels (150), wobei, wenn sich der Zwischenbolzen (13) in der Einsetzposition befindet, der Schwerpunkt des Zwischenbolzen s (13) unterhalb der Längsdrehachse (X) des Zwischenbolzens (13) liegt.

8. Hebehalterung (1) für einen Behälter (4) nach einem der Ansprüche 2 bis 7, ferner umfassend eine Gabel (14), die dazu ausgelegt ist, mit einer ringförmigen Nut (133) der zentralen Stange (130) des Zwischenbolzens (13) zusammenzuwirken, um den Zwischenbolzen in der Hebehalterung (1) zu halten.

9. Hebehalterung (1) für einen Behälter (4) nach einem der Ansprüche 1 bis 8, wobei die Hebehalterung (1) im Wesentlichen X-förmig ist, wobei sich die beiden oberen Bolzen (11) an den oberen Enden der beiden Schenkel des X befinden und sich die beiden unteren Bolzen (12) an den unteren Enden der beiden Schenkel des X befinden.

10. Hebehalterung (1) eines Behälters (4) nach einem der Ansprüche 1 bis 9, außerdem ein Einhängeelement (17), das so beschaffen ist, dass es ein Einhängen der Hebehalterung (1) an einem Hebearm (2) ermöglicht, wobei der Hebearm (2) dann das Bewegen der Hebehalterung (1) ermöglicht.

11. Hydraulische Hebevorrichtung für einen Behälter (4), die eine Hebehalterung (1) nach einem der Ansprüche 1 bis 10 und einen Hebearm (2) umfasst.

12. Hydraulische Hebevorrichtung für einen Behälter (4) nach Anspruch 11, wobei das Einhängeelement (17) eine Einhängestange ist, die dazu geeignet ist, von einem Haken des Hebearms (2) eingehakt zu werden, wobei die Hebehalterung (1) um die Einhängestange (17) drehbar ist.

13. Verfahren zum hydraulischen Heben eines Behälters (4), das dazu geeignet ist, mit Hilfe einer Hebehalterung (1) nach einem der Ansprüche 1 bis 10 durchgeführt zu werden, wobei das Verfahren die folgenden Schritte umfasst:
- Anordnen der Hebehalterung (1) in der zweiten Position gegenüber einem Behälter (4),
- Einsetzen der Zwischenbolzen (13) in obere komplementäre Öffnungen (48) des Behälters (4),
- Verriegeln der Zwischenbolzen (13) in den oberen Öffnungen (48) durch Schwenken der Zwischenbolzen (13) in den oberen Öffnungen (48), - Bewegen des Behälters (4) durch eine hydraulische Bewegung der Hebehalterung (1).

## Claims

1. Lifting support (1 ) for a container (4), comprising :
- two upper pins (11) and two lower pins (12), adapted to be inserted in complementary holes (46, 47) of the container (4) when the lifting support (1) is in a first position with respect to the container (4),
- two intermediate pins adapted to be inserted in two complementary upper holes (48) of the container (4) when the lifting support (1) is in a second position with respect to the container (4), the lifting support being **characterised in that** the two intermediate pins (13) are positioned between the two upper pins (11) and the two lower pins (12).

2. A lifting support (1) for a container (4) according to claim 1, wherein each intermediate pin (13) comprises a central rod (130) for insertion into an upper hole (48) of the container (4), and wherein each intermediate pin (13) is rotatable in a slot (152) of the lifting support (1) so as to be movable from an insertion position in the upper hole (48) in which the intermediate pin (13) is free to translate in the upper hole (48), to a locked position in which the intermediate pin (13) is locked against translation in the upper hole (48).

3. A lifting bracket (1) for a container (4) according to any of claims 1 or 2, wherein each intermediate pin (13) comprises a radial protrusion (140) of the central rod (130) adapted to provide a locking by a bayonet-type mounting when the intermediate pin (13) is inserted and pivoted into the upper complementary hole (48) of the container (4).

4. A lifting support (1) for a container (4) according to any of claims 2 or 3, wherein each intermediate pin (13) comprises an end (170) rotatably mounted about the central rod (130) and coaxial with the central rod (130).

5. A lifting support (1) for a container (4) according to any of claims 2 to 4, wherein each intermediate pin (13) comprises a counterweight (160) and a balance beam (150) located on both side of the central rod (130) and integral with the central rod (130).

6. The container (4) lifting support (1) according to claim 5, wherein the balance beam (150) comprises a gripping ring (1501) adapted to allow gripping of the balance beam (150) by gripping means.

7. A lifting support (1) for a container (4) according to any of claims 5 or 6, wherein the counterweight (160) has a mass greater than the mass of the balance beam (150), wherein when the intermediate pin (13) is in the insertion position, the centre of gravity of the intermediate pin (13) is below the longitudinal rotation axis (X) of the intermediate pin (13).

8. A lifting support (1) for a container (4) according to any of claims 2 to 7, further comprising a fork (14) adapted to cooperate with an annular groove (133) of the central shaft (130) of the intermediate pin (13), so as to hold the intermediate pin in the lifting support (1).

9. A lifting support (1) for a container (4) according to any of claims 1 to 8, wherein the lifting support (1) is substantially X-shaped, the two upper pins (11) being located at the upper ends of the two legs of the X and the two lower pins (12) being located at the lower ends of the two legs of the X.

10. A lifting support (1) for a container (4) according to any of claims 1 to 9, further comprising a hooking element (17) adapted to allow hooking of the lifting support (1) to a lifting arm (2), said lifting arm (2) then allowing the lifting support (1) to be moved.

11. A hydraulic container lifting apparatus (4) comprising a lifting support (1) according to any of claims 1 to 10 and a lifting arm (2).

12. A hydraulic container lifting apparatus (4) according to claim 11, wherein the hooking member (17) is a hooking bar adapted to be hooked by a hook of the lifting arm (2), the lifting support (1) being rotatable about the hooking bar (17).

13. A method of hydraulically lifting a container (4) adapted to be operated by means of a lifting support (1) according to any of claims 1 to 10, the method comprising the following steps:
- placing the lifting support (1) in the second position relative to a container (4),
- inserting the intermediate pins (13) into complementary upper holes (48) of the container (4),
- locking the intermediate pins (13) in the upper holes (48) by pivoting the intermediate pins (13) in the upper holes (48),
- moving the container (4) by means of a hydraulic movement of the lifting support (1).
